# EUROPEAN PATENT SPECIFICATION

(11) **EP 2 344 313 B1**
(45) Date of publication and mention of the grant of the patent: **09.01.2019**
(21) Application number: 09801754.4
(22) Date of filing: 08.10.2009
(51) Int. Cl.: B29B 15/12, B29C 53/80, B29C 53/66, B29C 70/50, B29C 70/52

(54) **A RESIN APPLICATOR AND A METHOD OF USING THE SAME**
HARZAPPLIKATOR UND VERWENDUNGSVERFAHREN DAFÜR
APPLICATEUR DE RÉSINE ET PROCÉDÉ D'UTILISATION CORRESPONDANT

(30) Priority: 08.10.2008 GB 0818468
(43) Date of publication of application: 20.07.2011
(73) Proprietor: Fernando, Gerard, Edgbaston Birmingham B15 3RB (GB)
(72) Inventor: FERNANDO, Gerard, Franklyn, B15 2TT West Midlands (GB); PANDITA, Surya, B15 2TT West Midlands (GB); PAGET, Mark, B15 2TT West Midlands (GB); SHOTTON-GALE, Nick, B15 2TT West Midlands (GB)
(74) Representative: HGF Limited
(86) International application number: PCT/GB2009/002417
(87) International publication number: WO 2010/041027

(56) References cited:
- US-A- 4 728 387
- US-A- 5 766 357
- US-A1- 2006 244 172

## Description

The present invention relates to an apparatus for applying resin to a plurality of fibres. The invention also provides a kit of parts for a resin applicator.

Fibre reinforced composite materials comprise a large number of fibres embedded in a matrix material. For example, carbon fibres embedded in an epoxy resin system. There are a number of well known manufacturing techniques for producing fibre composite materials including: hand lay-up of woven or non-woven fibre sheets, resin transfer moulding, filament winding and pultrusion.

In the case of filament winding and pultrusion, fibre tows, consisting of a large number of fibres in a bundle, are pulled from fibre creels and impregnated with resin. The fibres are then either wound onto a shaped mandrel (filament winding), or fed through a die (pultrusion), to form the final shape of the composite component. In each case the resin is cured to form a matrix.

In the case of composite materials comprising layers of sheet fibre material, the sheets are generally cut to shape and then laid-up to form the shape of the final component. In this method of manufacture the resin may either be preimpregnated into the sheets before lay-up (so called pre-preg), or it may be introduced into the fibre layers after lay-up. In each case the resin is cured to form the final component.

Regardless of the method of manufacture used, it is necessary to apply resin to the fibres at some stage in the production process. Historically, a number of methods have been used to apply resin to the fibres including immersing the fibres in a resin bath or spraying resin directly onto the fibres.

Existing methods of resin application have various disadvantages including limited production rates and resin wastage. In particular, resin bath immersion tends to over saturate the fibres with resin so that the resin drips from the fibres as they move from the resin bath to the next manufacturing step. This leads to an additional cleaning burden and wastage. Furthermore, because resin has a limited pot-life, some of the resin in the bath may not be used and has to be disposed safely. The cross-linking process associated with thermosetting resins is exothermic and therefore, on small volumes of the mixed resin can be permitted to be cross-linked prior to disposal.

Typical resin baths used in industrial processes have dimensions of approximately 1.5m³. Once the resin has run out, the resin bath must be refilled with the mixed resin and hardener. At the end of each production run or shift, the resin bath and all the items that had come into contact with the mixed resin system has to be cleaned thoroughly. This cleaning requires a large amount of solvent which can be harmful to the environment and which must be disposed of safely or recycled.

An alternative type of resin applicator is disclosed in a paper entitled "*Clean Filament Winding: Proof of Concept"* which was presented at the International Community for composites engineering (ICCE) conference in China on the 15-21 July 2007. The apparatus disclosed in this paper comprises a primary spreading pin which has a small resin bath machined into it. In use, fibre tows are pulled over the primary spreading pin so that the fibres become spread out before being passed through the small resin bath which is fed with resin via a resin supply channel. Although this apparatus is an improvement on the previously known methods of resin application described above, this apparatus has the following disadvantages: (i) the relatively large exposed surface area can result in evaporation and emission of low molecular weight components such as additives, solvents, etc to the atmosphere; (ii) with certain classes of resin components, for example, isocynates, amines, current legislation dictates efficient extraction of volatiles. This is not readily achieved; (iii) atmospheric moisture can also interact with components of the resin system thereby compromising its chemical integrity.

US 4 728 387 discloses an apparatus for applying resin to a plurality of fibres according to the preamble of claim 1 and a kit of parts for forming a resin applicator according to the preamble of claim 9.

US 5 766 357 A and US 2006 244 172 A1 disclose apparatus for fibre impregnation with modular components.

In a first aspect, the present invention provides an apparatus for applying resin to a plurality of fibres according to claim 1.

The present invention is beneficial as the housing helps to contain volatile chemical components within the housing thus reducing atmospheric pollution and exposure of the workforce to these substances. Furthermore, the housing reduces the possibility of resin spillage and it provides a means of enabling effective extraction to enable compliance with Health and Safety requirements, especially when working with potentially hazardous materials. For example, isocyanates and sensitisers such as amines.

The at least one fibre spreading surface is preferably located within the housing to help improve safety should the fibres break during processing. It has been found that the fibres are more likely to break when they are spread out and thus a balance must be struck between the extent of fibre spreading, which affects the infiltration of the resin into the fibres, and the likelihood of fibre breakage, which can slow down the production rate.

In one example, the fibre spreading surface is profiled to allow better control of the-extent of fibre spreading. Different profiles can be used for specified fibre types, production rates, resin systems etc. In preferred examples, the fibre spreading surface is concave or convex. A convex outer surface promotes a greater degree of fibre spreading, and a concave outer surface, whilst still spreading the fibres, provides a lower degree of fibre spreading.

In one alternative, the fibre spreading surface is a surface of a fibre spreading pin. The provision of a separate fibre spreading pin increases the versatility of the apparatus as the position of the pin may be optimised for the resin/fibre types etc.

In another alternative, the fibre spreading surface may be a surface of the resin applicator head. This reduces the number of components in the apparatus and increases its simplicity.

The apparatus preferably further comprises at least one fibre gathering surface arranged, in use, to gather the plurality of fibres as they move over the at least one fibre gathering surface. This is beneficial as it allows the degree of fibre spread to be reduced if desired. For example, before the fibres move onto the next processing step to help reduce the incidence of fibre breakage. The fibre gathering surface is preferably a surface of a fibre gathering pin.

According to the invention, the at least one fibre spreading surface and/or the at least one resin applicator head is an interchangeable modular component. Preferably, the at least one fibre gathering surface is also a modular component. This increases the versatility of the apparatus by allowing it to be easily modified for use with different types of fibres/resins, desired production rates, etc.

The at least one resin applicator head preferably comprises a resin applicator slot. The inventors have found that the application of resin through a slot aids the accurate application of resin without undue wastage.

At least one resin collector is preferably located proximate the at least one fibre exit port to collect excess resin from the fibres as they exit the apparatus.

In a preferred example the apparatus further comprises a resin mixer arranged, in use, to supply resin to the at least one resin applicator head on demand, wherein the resin mixer is arranged to mix at least two resin precursor materials together to form the resin. This arrangement is advantageous as it helps to reduce resin wastage by only mixing resin as it is required.

In one example the apparatus comprises at least one sensor, wherein the at least one sensor is arranged to sense a parameter of the resin and/or a parameter of the fibres. This helps the operator to control the manufacturing process thereby improving the quality of the finished product.

In a further example the apparatus may further comprise a resin heater to control the viscosity of the resin. Preferably, the heater enables localised heating of the resin, just prior to impregnation of the fibres, to provide an efficient means for controlling the viscosity of the resin. The heater will also make it possible to pre-crosslink in a controlled manner.

The apparatus may further comprise a curing apparatus located proximate the at least one fibre exit port so that the resin may be partially, or as desired, cured substantially as the fibres exit the housing. The curing apparatus may be a photo-cure apparatus, a microwave cure apparatus, an ultrasound cure apparatus or any other apparatus suitable for curing the resin substantially as it exits the housing.

In a second aspect, which does not form part of the present invention, a method of applying resin to a plurality of fibres is provided, comprising: passing a plurality of fibres through a housing containing at least one resin applicator head; spreading the plurality of fibres over at least one fibre spreading surface; and applying resin to the fibres as they move past the at least one resin applicator head.

The at least one fibre spreading surface is preferably located within the housing.

In one example, the method may further comprise a curing apparatus for curing the resin substantially as the fibres exit the housing.

In a third aspect, the present invention provides a kit of parts for forming a resin applicator according to claim 9.

In one example the at least one fibre spreading surface is a surface of the resin applicator head. In an alternative example, the at least one fibre spreading surface is a surface of a fibre spreading pin.

Preferably the kit of parts further comprises at least one fibre gathering surface which is preferably a surface of a fibre gathering pin.

According to the invention, the at least one fibre spreading surface and/or the at least one resin applicator head is an interchangeable modular component. Preferably, the at least one fibre gathering surface is also an interchangeable modular component.

An example of the invention will now be described with reference to the following figures in which:
Fig. 1 shows an isometric front view of a resin applicator according to the present invention;
Fig. 2 shows an isometric rear view of the resin applicator of Fig. 1;
Fig. 3 shows a partially exploded isometric view of the resin applicator of Fig. 1;
Fig. 4 shows an alternative partially exploded isometric view of the resin applicator of Fig. 1;
Fig. 5 shows a partially exploded isometric view of the lid portion of the resin applicator of Fig 1;
Fig. 6 shows a schematic view of the resin applicator of Fig 1 in use in a filament winding process;
Fig. 7 shows an isometric view of an alternative resin applicator head;
Fig. 8 shows a schematic view of an on-demand resin delivery system suitable for use with a resin applicator according to the present invention;
Fig. 9 shows a partially exploded isometric view of an alternative resin applicator according to the present invention;
Fig. 10 shows an alternative partially exploded isometric view of the resin applicator of Fig. 9; and
Fig. 11 shows a partially exploded isometric view of a lid portion of the resin applicator of Fig. 9.

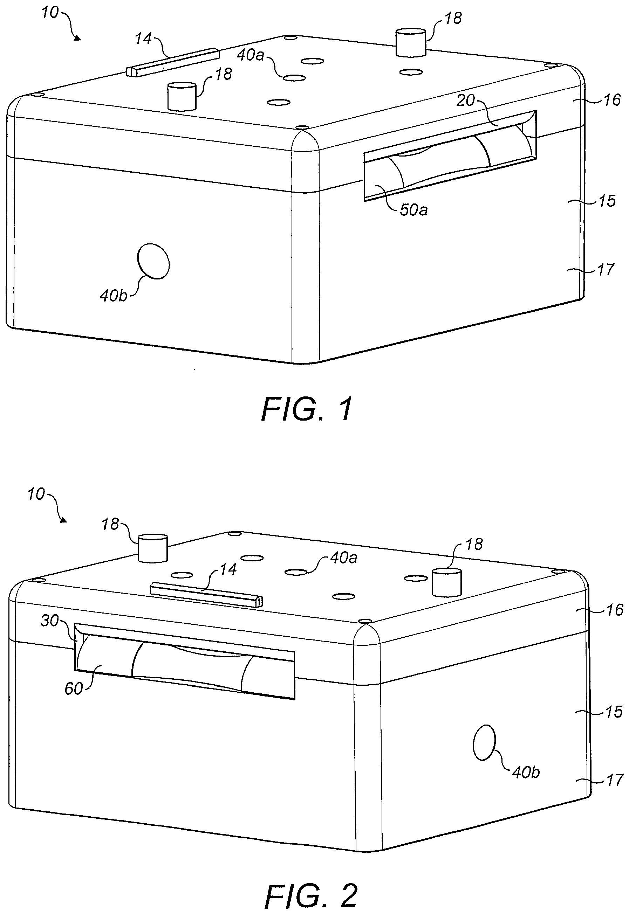

Fig. 1 shows a first view of a resin applicator unit 10 comprising a housing 15 having a base portion 17 and a lid 16. The base portion 17 and lid 16 together define fibre entry port 20 and fibre exit port 30 (Fig. 2). In addition, the lid 16 and base portion 17 comprise first and second resin inlet ports 40a, 40b respectively. In use, resin is supplied to the resin applicator heads 70a, 70b through the resin inlet ports 40a, 40b as will be described in greater detail below.

Located proximate the fibre entry port 20 is a first fibre spreading pin 50a over which the fibres pass as they enter the resin applicator unit 10. As can be seen in Fig. 1, the first fibre spreading pin 50a has a profiled, concave, surface. Similarly, a fibre gathering pin 60 is located proximate the fibre exit port 30 (Fig 2) over which the fibres pass as they exit the resin applicator unit 10. The fibre gathering pin 60 also has a profiled, concave, surface.

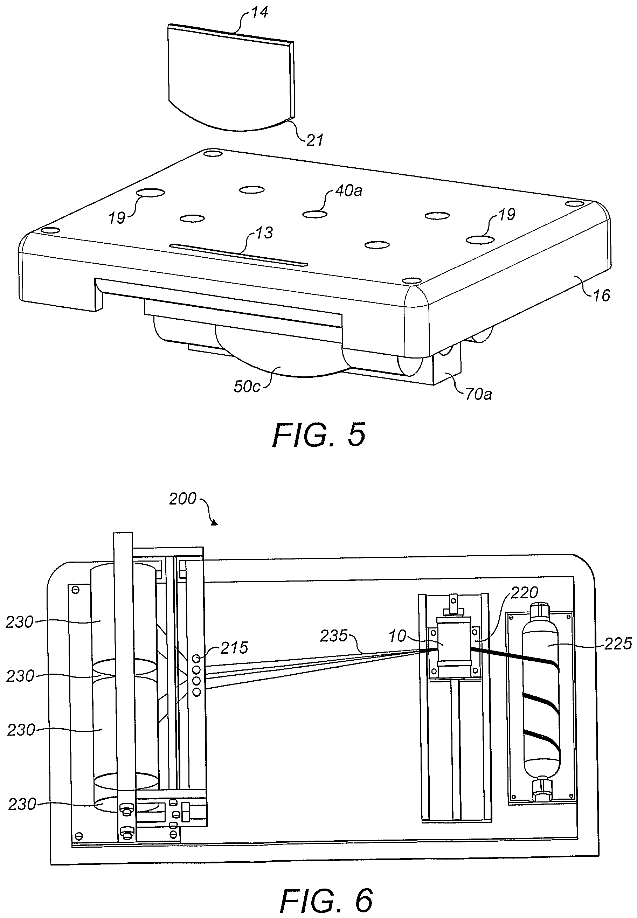

Also shown in Fig. 2 is resin collector gate 14 which resides in slot 13 (Fig. 5) in the lid 16. The resin collector gate 14 is arranged to slide within slot 13 such that when the exiting fibres pass under the resin collector gate 14, excess resin is scraped from the fibres back into the housing 15. The resin collector gate 14 thus acts as a scraper. The combination of the "scraper" 14 and the concave fibre gathering pin 60 serves to remove excess resin from both surfaces of the fibre tows. The excess resin is channelled back in to the housing 15. Ideally, but not essentially, the resin collector gate 14 is configured to substantially conform to the outer surface profile of the fibre gathering pin 60.

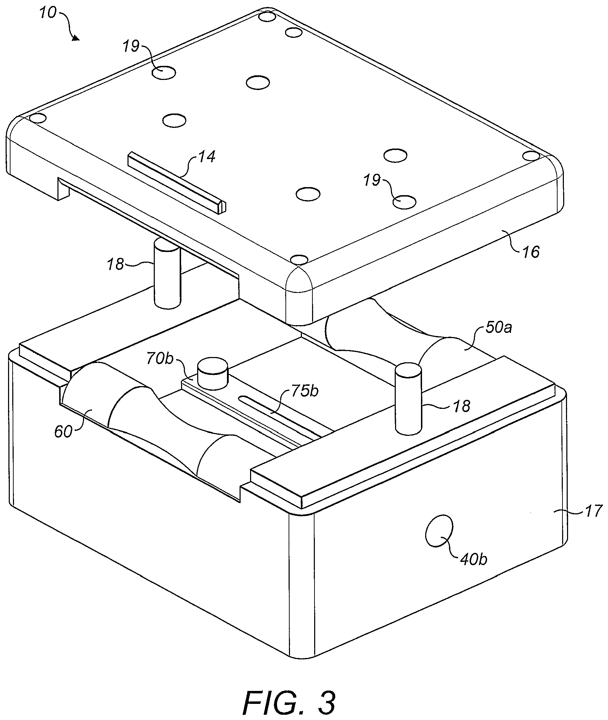

As can be seen most clearly in Fig. 3, lid alignment pegs 18 are provided on the base portion 17, and lid alignment holes 19 are provided on the lid 16 such that, when the lid 16 is in place on the base portion 17, accurate alignment of the lid and base portions is maintained.

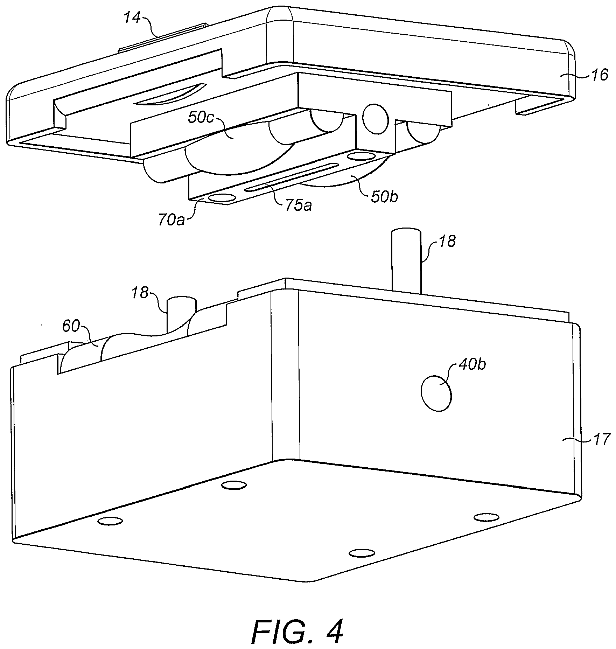

A first resin applicator head 70a is located on the underside of lid 16 (Fig 4). The first resin applicator head 70a has a resin applicator slot 75a which is in fluid communication with the first resin inlet port 40a. The first resin applicator head 70a is flanked on either side by second and third fibre spreading pins 50b, 50c which serve to further spread the fibres before and during the resin application as will be described in greater detail below.

A second resin applicator head 70b is located in the base portion 17 as shown in Fig. 3, the second resin applicator head 70b also comprises a resin applicator slot 75b which is supplied with resin via the second resin inlet port 40b.

An example use of the resin applicator unit 10 will now be given.

In use, four fibre tows 235, each comprising a large number of fibres in a bundle, are drawn through the resin applicator unit 10 from creels 230. The fibre tows 235 enter the resin applicator unit 10 through fibre entry port 20 and exit through fibre exit port 30.

As the fibre tows 235 enter the resin applicator unit 10 they pass over and in contact with the first fibre spreading pin 50a such that they are spread to a first spread amount in the axial direction of the first fibre spreading pin 50a. The spread fibre tows 235 next pass over and in contact with the second fibre spreading pin 50b where they become spread to a second, greater, spread amount. The third fibre spreading pin 50c serves to maintain this second spread amount across the resin applicator heads 70a, 70b.

As the spread fibres move past the resin applicator heads 70a, 70b they are coated with resin from the resin applicator slots 75a, 75b. In this example the fibres do not contact the resin applicator heads 70a, 70b. However, in an alternative example, the fibres may contact one or both of the resin applicator heads 70a, 70b.

Before the fibres exit the resin applicator unit 10, they pass over and in contact with the fibre gathering pin 60 which gathers the fibres from the second extent of spreading to a third extent of spreading. This helps to prevent down stream fibre breakage. For the sake of clarity, it should be understood that whilst the fibre gathering pin 60 gathers the fibres together, it need not gather the fibres to such an extent that they are returned to their original spacing.

Fig. 6 shows an example of the resin applicator unit 10 in use in a filament winding apparatus 200. The filament winding apparatus 200 comprises a plurality of fibre creels 230 from which four fibre tows 235 are drawn. The filament winding apparatus 200 further comprises a tensioning system 215 for controlling the tension of the fibre tows, a mandrel 225 onto which the fibres are wound, and a traveller 220.

In the example shown in Fig. 6, the resin applicator unit 10 is mounted on the traveller 220 such that it moves from side to side as the traveller traverses the length of the mandrel 225. Although not shown in Fig. 6, the resin applicator unit 10 is mounted above the mandrel 225 in the vertical direction as this has been shown to be advantageous to the final product quality.

The fibre tows 235 are drawn from the creels 230, through tensioning system 215 and onto the resin applicator unit 10 where resin is applied as described above. The fibres exit the resin applicator unit 10 and are wound onto the mandrel 225 as- the traveller 220 moves in the axial direction of the mandrel 225. In another example (not shown) the resin applicator unit 10 may be rigidly mounted upstream of the traveller 220.

It can be readily appreciated from Fig. 6 that the resin applicator unit 10 is a considerably cleaner method of applying resin to fibres than the resin baths of the prior art since there is little or no opportunity for the resin to drip from the fibres onto the surrounding equipment. The reason for this is two-fold. Firstly, because the resin applicator unit 10 is placed as far downstream in the process as possible, such that the resin coated fibres do not have far to travel to the mandrel 225. And secondly, because the resin applicator unit 10 provides controlled application of the resin to the fibres such that the fibres do not become overly saturated with resin.

Although the resin applicator unit 10 is shown in a filament winding process 200 in Fig. 6, it should be understood that the resin applicator unit 10 is also suitable for use in other composite material production methods such as pultrusion and the preparation of pre-preg materials. In addition, it will be understood that in the example given above the number of fibre tows 235 is an example only and that a greater or lesser number of fibre tows may be used. Four to twelve fibre tows are considered to represent a desirable number of fibre tows.

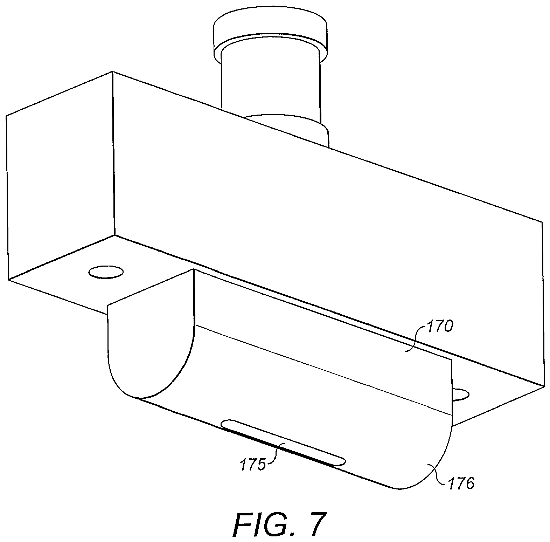

Fig. 7 shows an alternative resin applicator head 170 which is suitable for use in the resin applicator unit 10 described above. In this example, the resin applicator head 170 comprises a resin applicator slot 175 located on a substantially cylindrical outer surface 176. The cylindrical outer surface 176 provides a further surface over which the fibres may pass, in contact, in order to be spread before reaching the resin applicator slot 175. The resin applicator head 170 can thus provide both a fibre spreading, and a resin application, function. The resin applicator head 170 can therefore be used in addition to, or as an alternative to, the fibre spreading pins 50a, 50b, 50c.

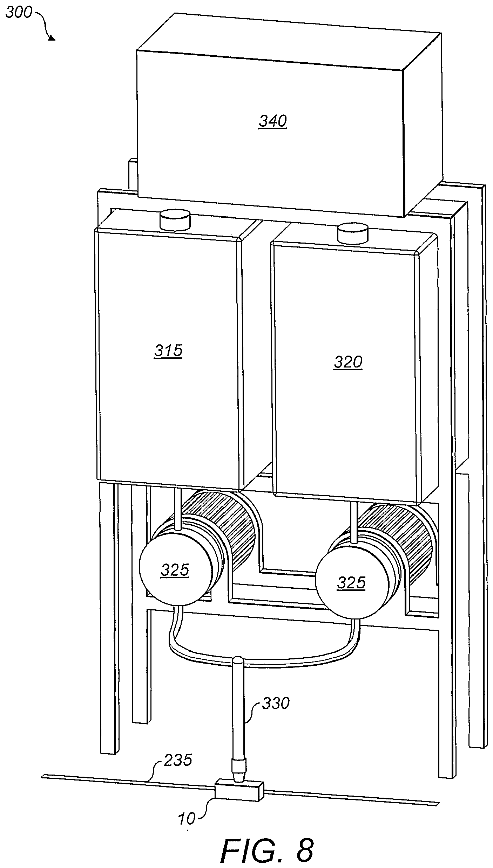

Referring now to Fig. 8, a resin delivery system 300, suitable for use with a resin applicator unit according to the present invention, is shown. The resin delivery system 300 comprises a resin reservoir 315 and a hardener reservoir 320. Resin from the resin reservoir 315 and hardener from the hardener reservoir 320 are pumped out from the reservoirs by gear pumps 325 and mixed together by a static mixer 330. The static mixer 330 supplies resin to the resin applicator unit 10. Although only one supply position is shown in Fig. 8, it will be appreciated that resin may be supplied to more than one resin inlet port of the resin applicator unit 10, for example resin inlet ports 40a, 40b described above.

Fig. 8 also shows fibre tows 235 passing through the resin applicator unit 10 and feedback control units 340 which may control, for example, the resin mixture, the resin supply or any other parameter of the resin delivery system 300 or resin applicator unit 10.

The resin delivery system 300 shown in Fig. 8 is an example of an on-demand resin delivery system suitable for use with the present invention. It will be appreciated that other on-demand resin delivery systems may be used such as, for example, a pre-mixed batch of resin supplied to the resin applicator unit 10 via a pump.

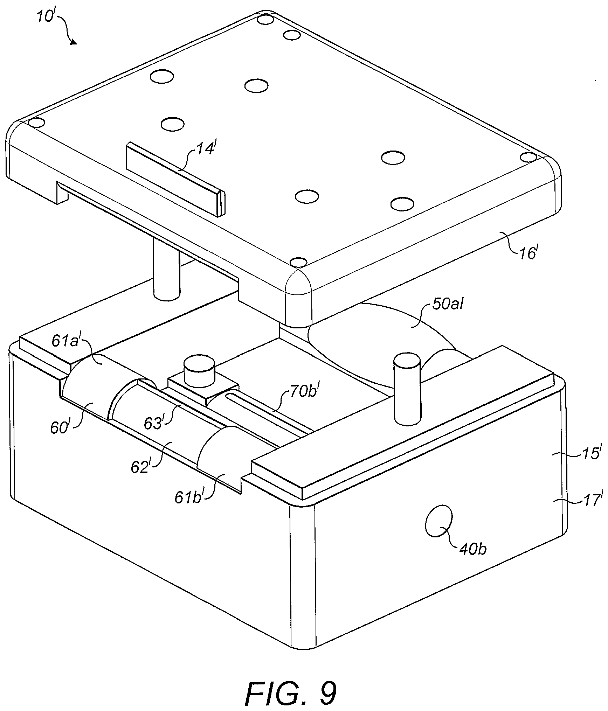

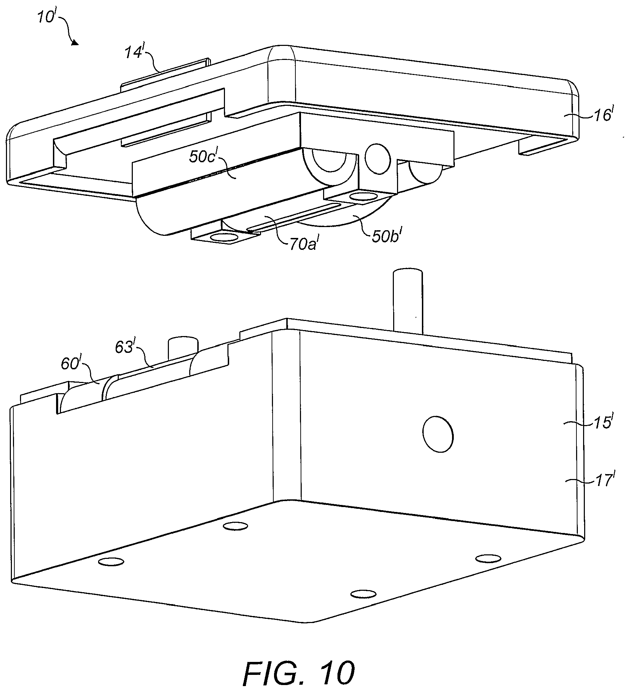

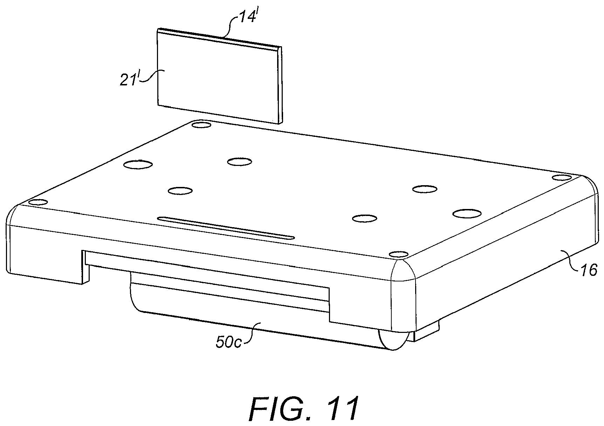

Figures 9 to 11 show an alternative resin applicator unit 10' according to an embodiment of the present invention. The resin applicator unit 10' is similar in many respects to the resin applicator unit 10 described above. However, there are a number of differences as detailed below.

The first fibre spreading pin 50a' of the resin applicator unit 10' has a convex surface. In addition, the fibre gathering pin 60' of resin applicator unit 10' has a substantially stepped cylindrical profile with end portions 61a', 61b' having a greater external diameter than central portion 62'. The central portion 62' also has a resin collector ridge 63' which extends between the two end portions 61a', 61b'.

The first and second resin applicator heads 70a', 70b' of resin applicator unit 10' have curved outer surfaces. Also, the third fibre spreading pin 50c' has a cylindrical profile.

The resin collector gate 14' has a straight lower edge 21'. The resin collector ridge 63' of fibre gathering pin 60' is positioned such that the fibres exiting the housing 15' are scraped between the resin collector gate 14' and the resin collector ridge 63'. In an alternative example (not shown) the fibre gathering pin 60' has a resin collector groove rather than a resin collector ridge, wherein the resin collector groove is a groove in the surface of the fibre gathering pin 60'. In a further alternative example (not shown) the fibre gathering pin 60' does not have a resin collector ridge such that exiting fibres are scraped between the outer surface of the fibre gathering pin 60' and the resin collector gate 14'.

According to the invention, the at least one fibre spreading surface and/or at least one applicator head is an interchangeable modular component. In a further example (not shown), the resin applicator unit may be supplied with any number of interchangeable modular components such as, for example, interchangeable fibre spreading pins, fibre gathering pins, housings, resin collector gates and resin applicator heads. In this way, the resin applicator unit can be readily optimised for use in different circumstances such as with different types of fibres, numbers of fibre tows, types of resin systems, or any other variable. It is to be understood that, even if the components of the resin applicator unit cannot be changed, different types of fibres, numbers of fibre tows, types of resin systems, etc. may be processed using the resin applicator unit of the present invention.

The resin applicator unit of the present invention can be used with fibres of all types. For example, fibre tows comprising fibres of the same materials/dimensions, or fibre tows comprising fibres of different materials/dimensions, so called "hybrid fibres".

The fibre spreading/gathering surfaces, whether on pins, resin applicator heads, or in any other suitable location, may be cylindrical, concave, or convex, or any other suitable profile such as sinusoidal parabolic etc. Furthermore, in the above description the fibre spreading surfaces/pins are described as being located within the housing 15. However, in an alternative example (not shown) at least one, or all, of the fibre spreading surfaces/pins may be located outside the housing.

In addition, the housing may comprise more than one fibre entry port and more than one fibre exit port. The number of fibre entry and exit ports need not be equal. For example, each fibre tow may enter the housing via a separate fibre entry port, with an associated fibre spreading pin or surface. The fibres may then all exit the housing via a single fibre exit port. It will be understood that any combination of fibre entry/exit ports, fibre spreading pins/surfaces or resin applicator heads may be used as desired.

In another example, (not shown) the resin applicator unit is provided with a heater for heating the resin thereby providing the ability to control the viscosity of the resin. In addition, one or more sensors may be provided to sense, for example, the tension of the fibres, the chemical integrity of the resin, the viscosity of the resin, the level of the resin within the housing, or any other parameter. If required, the resin applicator unit 10 can be provided with a curing apparatus (not shown) located proximate the fibre exit port to cure the resin substantially as the fibres exit the housing. The curing apparatus may be a photo-cure apparatus, a microwave cure apparatus, an ultrasound cure apparatus or any other apparatus suitable for curing the resin as the fibres exit the housing.

It will be appreciated that resin applicator units according to the present invention can be retro-fitted to existing production machinery without the need for costly overhaul. Furthermore, because the dimensions of the resin applicator unit are significantly smaller than those of conventional resin baths (100mm³ as opposed to 1.5m³) the resin applicator unit can be fitted into much less factory floor space than known resin baths.

The rate of production for standard resin baths is approximately 20 metres of fibre per minute. In contrast to this, the resin applicator unit of the present invention has been shown to be capable of production speeds of up to 40 metres of fibre per minute.

The scope of the invention is defined by the claims which follow.

## Claims

1. An apparatus for applying resin to a plurality of fibres, comprising:
a housing (15) having at least one fibre entry port (20) and at least one fibre exit port (30);
at least one fibre spreading surface arranged, in use, to spread a plurality of fibres as they move over the at least one fibre spreading surface; and
at least one resin applicator head located within the housing (15), the at least one resin applicator head being arranged, in use, to apply resin to the fibers as they move past the at last one resin applicator head,
**characterised in that** the at least one fibre spreading surface, and/or the at least one resin applicator head, is an interchangeable modular component.

2. The apparatus as claimed in claim 1, wherein the at least one fibre spreading surface is located within the housing (15), and/or wherein the at least one fibre spreading surface is a surface of a fibre spreading pin.

3. The apparatus as claimed in claim 1 or 2, wherein the at least one fibre spreading surface is profiled, preferably wherein the at least one fibre spreading surface is concave or convex.

4. The apparatus as claimed in claim 1, wherein the at least one fibre spreading surface is a surface of the at least one resin applicator head, and wherein the at least one fibre spreading surface is located within the housing (15) .

5. The apparatus as claimed in any preceding claim, further comprising at least one fibre gathering surface arranged, in use, to gather the plurality of fibres as they move over the at least one fibre gathering surface, preferably wherein the at least one fibre gathering surface is a surface of a fibre gathering pin.

6. The apparatus as claimed in claim 5, wherein the at least one fibre gathering surface is an interchangeable modular component.

7. The apparatus as claimed in any preceding claim, wherein the at least one resin applicator head comprises a resin applicator slot.

8. The apparatus as claimed in any preceding claim, further comprising:
at least one resin collector located proximate the at least one fibre exit port (30); and/or
a resin mixer arranged, in use, to supply resin to the at least one resin applicator head on demand, wherein the resin mixer is arranged to mix at least two resin precursor materials together to form the resin; and/or
at least one sensor, wherein the at least one sensor is arranged to sense a parameter of the resin and/or a parameter of the fibres; and/or
a resin heater; and/or
a curing apparatus located proximate the at least one fibre exit port (30).

9. A kit of parts for forming a resin applicator, comprising:
a housing (15) having at least one fibre entry port (20) and at least one fibre exit port (30);
at least one fibre spreading surface; and
at least one resin applicator head,
wherein the at least one resin applicator head is arranged to be located within the housing (15),
**characterised in that** the at least one fibre spreading surface is an interchangeable modular component.

10. The kit of parts as claimed in claim 9, wherein either the at least one fibre spreading surface is a surface of the at least one resin applicator head or the at least one fibre spreading surface is a surface of a fibre spreading pin.

11. The kit of parts as claimed in claim 9 or 10, further comprising at least one fibre gathering surface, preferably wherein the at least one fibre gathering surface is a surface of a fibre gathering pin, preferably wherein the at least one fibre gathering surface is an interchangeable modular component.

## Patentansprüche

1. Vorrichtung zum Applizieren von Harz auf eine Vielzahl von Fasern, umfassend:
ein Gehäuse (15) mit mindestens einer ersten Fasereintrittsöffnung (20) und mindestens einer Faseraustrittsöffnung (30);
mindestens einer Faserverteilungsfläche, die in Gebrauch angeordnet ist, um eine Vielzahl von Fasern zu verteilen, während sie sich über die mindestens eine Faserverteilungsfläche bewegen; und mindestens einen im Gehäuse (15) befindlichen Harzapplikatorkopf, wobei der mindestens eine Harzapplikatorkopf in Gebrauch angeordnet ist, um Harz auf die Fasern zu applizieren, während sie sich entlang dem mindestens einen Harzapplikatorkopf bewegen, **dadurch gekennzeichnet, dass** die mindestens eine Faserverteilungsfläche und/oder der mindestens eine Harzapplikatorkopf eine austauschbare modulare Komponente ist.

2. Vorrichtung nach Anspruch 1, wobei sich die mindestens eine Faserverteilungsfläche im Gehäuse (15) befindet und/oder wobei die mindestens eine Faserverteilungsfläche eine Fläche eines Faserverteilungsstifts ist.

3. Vorrichtung nach Anspruch 1 oder 2, wobei die mindestens eine Faserverteilungsfläche profiliert ist, vorzugsweise wobei die mindestens eine Faserverteilungsfläche konkav oder konvex ist.

4. Vorrichtung nach Anspruch 1, wobei die mindestens eine Faserverteilungsfläche eine Fläche des mindestens einen Harzapplikatorkopfs ist und wobei sich die mindestens eine Faserverteilungsfläche im Gehäuse (15) befindet.

5. Vorrichtung nach einem der vorstehenden Ansprüche, ferner umfassend mindestens eine Fasersammelfläche, die in Gebrauch angeordnet ist, um die Vielzahl von Fasern zu sammeln, während sie sich über die mindestens eine Fasersammelfläche bewegen, vorzugsweise wobei die mindestens eine Fasersammelfläche eine Fläche eines Fasersammelstifts ist.

6. Vorrichtung nach Anspruch 5, wobei die mindestens eine Fasersammelfläche eine austauschbare modulare Komponente ist.

7. Vorrichtung nach einem der vorstehenden Ansprüche, wobei der mindestens eine Harzapplikatorkopf einen Harzapplikatorschlitz umfasst.

8. Vorrichtung nach einem der vorstehenden Ansprüche, ferner umfassend:
mindestens einen proximal der mindestens einen Faserauslassöffnung (30) befindlichen Harzkollektor; und/oder
einen Harzmischer, der in Gebrauch angeordnet ist, um bei Bedarf Harz zum mindestens einen Harzapplikatorkopf zuzuführen, wobei der Harzmischer angeordnet ist, um mindestens zwei Harzvorläufermaterialien zu dem Harz zu mischen; und/oder
mindestens einen Sensor, wobei der mindestens eine Sensor angeordnet ist, um einen Parameter des Harzes und/oder einen Parameter der Fasern zu erfassen; und/oder
einen Harzheizer; und/oder
eine Aushärtvorrichtung, die sich proximal der mindestens einen Faseraustrittsöffnung (30) befindet.

9. Set aus Teilen zum Formen eines Harzapplikators, umfassend:
ein Gehäuse (15) mit mindestens einer ersten Fasereintrittsöffnung (20) und mindestens einer Faseraustrittsöffnung (30);
mindestens eine Faserverteilungsfläche; und
mindestens einen Harzapplikatorkopf, wobei der mindestens eine Harzapplikatorkopf angeordnet ist, um sich im Gehäuse (15) zu befinden, **dadurch gekennzeichnet, dass** die mindestens eine Harzverteilungsfläche eine austauschbare modulare Komponente ist.

10. Set aus Teilen nach Anspruch 9, wobei entweder die mindestens eine Faserverteilungsfläche eine Fläche des mindestens einen Harzapplikatorkopfs ist oder die mindestens eine Faserverteilungsfläche eine Fläche eines Faserverteilungsstifts ist.

11. Set aus Teilen nach Anspruch 9 oder 10, ferner umfassend mindestens eine Fasersammelfläche, vorzugsweise wobei die mindestens eine Fasersammelfläche eine Fläche eines Fasersammelstifts ist, vorzugsweise wobei die mindestens eine Fasersammelfläche eine austauschbare modulare Komponente ist.

## Revendications

1. Appareil pour application de résine sur une pluralité de fibres, comprenant :
un boîtier (15) ayant au moins un orifice d'entrée de fibres (20) et au moins un orifice de sortie de fibres (30) ;
au moins une surface d'étalement de fibres agencée, pendant l'utilisation, de manière à étaler une pluralité de fibres quand elles se déplacent sur la ou les surfaces d'étalement de fibres ; et au moins une tête d'application de résine située dans le boîtier (15), la ou les têtes d'application de résine étant agencées, pendant l'utilisation, pour appliquer la résine sur les fibres lorsqu'elles passent devant la ou les têtes d'application de résine, **caractérisé en ce que** la ou les surfaces d'étalement de fibres, et/ou la ou les têtes d'application de résine, sont un composant modulaire interchangeable.

2. Appareil selon la revendication 1, dans lequel la ou les surfaces d'étalement de fibres sont situées dans le boîtier (15), et/ou la ou les surfaces d'étalement de fibres sont une surface de broche d'étalement de fibres.

3. Appareil selon la revendication 1 ou 2, la ou les surfaces d'étalement de fibres étant profilées, et la ou les surfaces d'étalement de fibres étant de préférence concaves ou convexes.

4. Appareil selon la revendication 1, la ou les surfaces d'étalement de fibres étant une surface de la ou des têtes d'application de résine, et la ou les surfaces d'étalement de fibres étant situées dans le boîtier (15).

5. Appareil selon l'une quelconque des revendications précédentes, comprenant en outre au moins une surface de rassemblement de fibres agencée, pendant l'utilisation, pour rassembler la pluralité de fibres quand elles passent sur la ou les surfaces de rassemblement de fibres, la ou les surfaces de rassemblement de fibres étant de préférence une surface d'une broche de rassemblement de fibres.

6. Appareil selon la revendication 5, dans lequel la ou les surfaces de rassemblement de fibres sont un composant modulaire interchangeable.

7. Appareil selon l'une quelconque des revendications précédentes, dans lequel la ou les têtes d'application de résine comprend une fente d'application de résine.

8. Appareil selon l'une quelconque des revendications précédentes, comprenant en outre :
au moins un collecteur de résine situé à proximité du ou des orifices de sortie de fibres (30) ; et/ou un mélangeur de résine agencé, pendant l'utilisation, pour fournir sur demande la résine à la ou aux têtes d'application de résine, le mélangeur de résine étant agencé pour mélanger ensemble au moins deux matériaux précurseurs de résine pour former la résine ; et/ou au moins un capteur, le ou les capteurs étant agencés pour détecter un paramètre de la résine et/ou un paramètres des fibres ; et/ou un réchauffeur de résine ; et/ou un appareil de durcissement situé à proximité du ou des orifices de sortie de fibres (30).

9. Kit de pièces pour formation d'un applicateur de résine, comprenant :
un boîtier (15) ayant au moins un orifice d'entrée de fibres (20) et au moins un orifice de sortie de fibres (30) ;
au moins une surface d'étalement de fibres ; et au moins une tête d'application de résine, la ou les têtes d'application de résine étant agencées pour être situées dans le boîtier (15), **caractérisée en ce que** la ou les surfaces d'étalement de fibres sont un composant modulaire interchangeable.

10. Kit de pièces selon la revendication 9, dans lequel la ou les surfaces d'étalement de fibres sont une surface de la ou des têtes d'application de résine, ou la ou les surfaces d'étalement de fibres sont une surface d'une broche d'étalement de fibres.

11. Kit de pièces selon la revendication 9 ou 10, comprenant en outre au moins une surface de rassemblement de fibres, la ou les surfaces de rassemblement de fibres étant de préférence une surface d'une broche de rassemblement de fibres, la ou les surface de rassemblement de fibres étant de préférence un composant modulaire interchangeable.
